Europäisches Patentamt

European Patent Office

Office européen des brevets

(11) Publication number: **0 026 952**

**B1**

(12) **EUROPEAN PATENT SPECIFICATION**

(45) Date of publication of patent specification: **26.09.84**

(51) Int. Cl.³: **G 02 B 5/16**

(21) Application number: **80200925.8**

(22) Date of filing: **01.10.80**

(54) **Cable comprising optical fibres.**

(30) Priority: **08.10.79 NL 7907433**

(43) Date of publication of application:
**15.04.81 Bulletin 81/15**

(45) Publication of the grant of the patent:
**26.09.84 Bulletin 84/39**

(84) Designated Contracting States:
**AT BE DE FR GB IT NL SE**

(56) References cited:
**EP-A-0 022 036**
**DE-A-2 519 680**
**DE-A-2 740 162**
**DE-B-2 459 997**
**DE-C- 659 346**
**FR-A-2 337 411**
**FR-A-2 404 236**
**US-A-4 039 248**

**Proceedings of the 27th International Wire and Cable Symposium, Vol. 27(1978), pages 404-410**

(73) Proprietor: **N.V. Philips' Gloeilampenfabrieken
Groenewoudseweg 1
NL-5621 BA Eindhoven (NL)**

(72) Inventor: **van der Hoek, Willem
c/o INT. OCTROOIBUREAU B.V. Prof. Holstlaan 6
NL-5656 AA Eindhoven (NL)**
Inventor: **Tuin, Hermanus Nicolaas
c/o INT. OCTROOIBUREAU B.V. Prof. Holstlaan 6
NL-5656 AA Eindhoven (NL)**

(74) Representative: **Auwerda, Cornelis Petrus et al
INTERNATIONAAL OCTROOIBUREAU B.V. Prof.
Holstlaan 6
NL-5656 AA Eindhoven (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to an optical fibre cable of the kind in which the optical fibres are located in grooves which extend helically along the full length of the cable in the same direction or in a periodically changing direction either in the outer surface of a cylindrical body which extends along the length of the cable or in the inner surface of a jacket directly surrounding said cylindrical body. The optical fibres are disposed in the grooves with such an excess length that elongation which may occur, for example, during laying of the calbe as well as thermal extension can be compensated for.

Cables in which the grooves are arranged in the circumference of a central cylindrical body are known *per se*. A further element which is, for example, provided in the centre of the cylindrical elongate synthetic resin material body may be present for the purpose of absorbing tensile loads. One or more metal wires or synthetic resin material wires (for example Kevlar) or glass fibres may, for example, be used for this purpose. An article by Swiecicki, in Proceedings of the 27th International Wire and Cable Symposion, Vol. 27 (1978) pages 404—410, discloses that straight optical fibres can be fixed in an undulating configuration by placing the fibres loosely in helical slots.

The European patent application 80401006.4, wherein priority of 2.7.79 is requested and the states DE, GB and SE are designated, discloses a helically extending groove for positioning an optical fibre. It is stated that the fibre may be fixed at certain points in the groove, but the means for and advantages of this fixation are not disclosed.

The grooves may extend helically along the full length of the cable into one direction or they may change their direction after one or more turns or parts thereof into one direction and extend for one or more turns or part thereof into the other direction.

The grooves may be of any cross-section, for example rectangular, provided there is sufficient room so that the fibres, by taking up another position in the groove without being mechanically loaded in a manner which negatively effects the optical quality, can offset positive or negative changes in the ratio between the length of the cable and the length of the fibres. One or more layers of a synthetic resin material may be applied around the cylindrical elongate body, for example in the form of wound tapes and one or more jackets and reinforcing elements, wire armourings etc., as customary in the cable industry to protect the cables from moisture and mechanical violence. The grooves may be filled along the full length with a material which guarantees the longitudinal water tightness of the cable, such as, a paraffin jelly, silicone oil or silicone grease.

With a cable of this nature there is the risk that on vibration of a portion of the cable, for example due to traffic, or in the case of a vertical or sloping position of the cable, the fibres move into a general longitudinal direction of the cable and the originally uniformly distributed excess length assembles in one or more places, for example the lowermost place (s). This is disadvantageous, as changes in the length of the cable, for example as a result of an increase in temperature of the environment may result in a mechanical load of the optical fibres in those places where there is no excess length any longer. Mechanical load also occurs when the temperature falls in those places in the cable where no excess length can be taken up any longer.

The German patent applications 2459997 and 2519680, the United States patent 4039248 and the French patent application 2404236 disclose constructions where a straight optical fibre is forced into an undulating configuration. In these constructions the fibres must be prevented from regaining a straight configuration by fixing the fibres at regular distances to an element which may increase its length somewhat during use.

It is an object of the invention to prevent the fibres from moving into the longitudinal direction of the cable, so that the excess length of the optical fibre remains uniformly distributed along the full cable length, irrespective of the position of the cable.

This object is accomplished by means of a cable as described in the opening paragraph, which is characterized in that the excess length of each fibre is uniformly distributed in the respective groove along the whole cable length, such distribution being maintained by fixing each fibre in the respective groove at regular intervals along the groove.

The object of the invention is further accomplished by fixing the fibres adhesively by a plastics material disposed in or over the grooves.

The optical fibres can be fixed in the grooves in different manners. It is advantageous to fix the fibres after each substantial full turn. The fibre portion located between the points where the fibre is fixed can move freely in the grooves. Elongation or shrinking of the cable causes the free portion of the fibre to move in the groove towards the axis of the centrally located body or in a direction away therefrom respectively, without the occurrence of a mechanical load which might be detrimental to the optical properties. It is, however, no longer possible for the excess length to move because of vibration, for example caused by traffic or because the cable is not located horizontally, while the excess length of the optical fibres remains uniformly distributed along the full cable length. There now follows a description of those embodiments in particular in which the grooves have been disposed in the outer circumference of a centrally located cylindrical body. Fixation of the optical fibres can now be obtained in, for example, the following manner:

a) The cylindrical body is provided with an extra groove which is preferably of the same depth as the grooves which are intended to accommodate the optical fibres. The extra groove may extend helically or not, but it must cross the grooves intended for the optical fibres. A wire which is connected to the optical fibres at the crossing points is placed in the extra groove. In a suitable embodiment the wire is injection-moulded in situ from a thermoplastic synthetic resin material, which is connected *in situ* to the optical fibres at the crossing points.

It is alternatively possible to fill the extra groove after location of the optical fibres therein with a synthetic resin compound, for example a foamed synthetic resin material, such as a polyurethane. The last-mentioned embodiment has the advantage that, should the cable develop a leak, water cannot pass through the cable *via* the grooves which accommodate the optical fibres. Both measures can, of course, be combined.

b) A compound which blocks the movement of fibres can be disposed at regular distances in the helical grooves which accommodate the optical fibres. The compound may consist of a thermoplastics synthetic resin material, for example in the foamed form, for example polyurethane resin. The points where the fibres are fixed may be on a line which extends in parallel with the axis of the grooved, central body. It is alternatively possible to provide ring-shaped fixing points at regular distances, so that all the parallel grooves with fibres are given a fixing point in that location. The compound can be applied *in situ* into the grooves. It is alternatively possible to dispose on the outer circumference a strip of foamable material, which starts foaming in response to the transfer of heat, for example when the jacket is applied, thus filling the grooves at the strip-groove crossing points. Also in this embodiment the migration of water through the grooves which accommodate the optical fibres can be prevented adequately.

c) After the optical fibres have been positioned in grooves of the cylindrical body, an adhesive strip is disposed on the circumference of the body, the adhesive side of the strip facing the bottom of the grooves. The adhesive strip may extend predominantly in parallel with the axis of the cylindrical body. It is, however, alternatively possible to provide the adhesive strip in a different manner, provided the adhesive strip crosses the grooves in which the optical fibres have been located, for example annularly or helically.

Due to the presence of the adhesive strip which is connected to the fibres at regular distances, in the case of helical grooves for example after every full turn of 360°, the fibre is prevented from moving into the longitudinal direction of the cable, which might result in an accumulation of optical fibres in certain places.

In this cable construction it is also possible for the fibres, by changing their position in the groove, to neutralize unavoidable changes in the ratio cable length-to-fibre(s) length in a posi-tive (mechanical elongation, thermal expan-sion) and negative sense (shrinkage), without the fibres being mechanically loaded to a prohibited extent.

The adhesive strip may, for example, consist of a saturated polyester synthetic resin material strip which is coated on one side with a preferably permanently sticky material, for example a mixture of a natural or a synthetic rubber and a natural resin, for example a rosin derivative.

The invention will now be further explained with reference to the accompanying drawing.

In the drawing:

Figs. 1—5 show side-elevational, partly cross-sectional views of cable portions according to the invention;

Fig. 6 shows a cross-sectional view of the cable according to the invention;

Fig. 7 shows a cross-sectional view of another cable according to the invention.

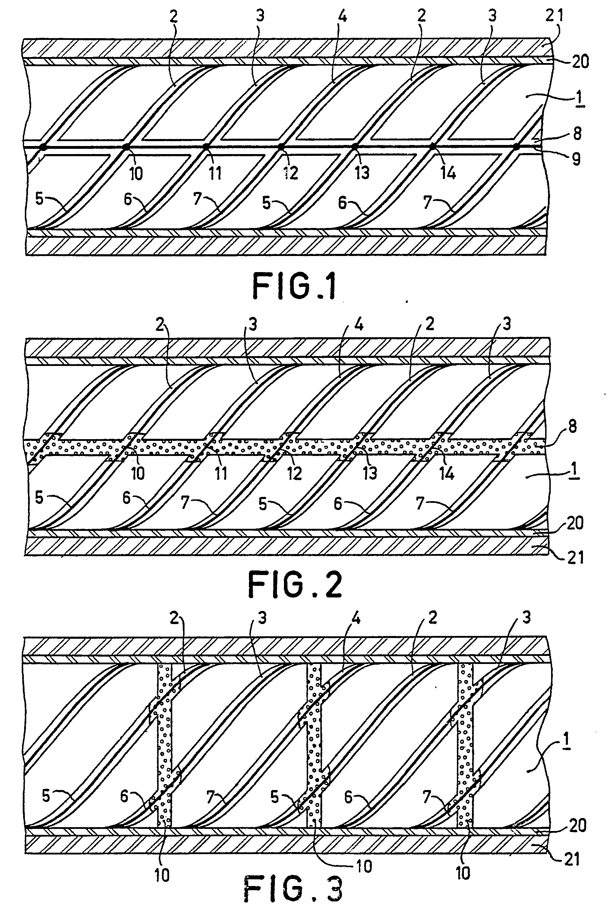

The cable portion shown in a side-elevational, partly cross-sectional view in Fig. 1 comprises a cylindrical elongate body 1 of a predominantly circular cross-section. A number of grooves 2, 3 and 4, which accommodate the optical fibres 5, 6 and 7 are located around the circumference of the body 1. A groove 8, which accommodates a wire 9, is provided at the circumference of the body 1 parallel with the axis of the cylindrical body 1. At the cross-over points, indicated as 10 to 14, inclusive, the wire 9 is connected to the appropriate optical fibres 5 (twice), 6 (twice) and 7 in the respective grooves 2, 3 and 4. The Figure shows that the optical fibres are fixed by the wire after each full turn. In this construction it is possible for the optical fibres to take up a different position in the grooves in the case of elongation or shrinkage of the cable into the longitudinal direction, without a prohibited load being produced. Also the wire 9 is still movable in the groove 8. The connection to the optical fibres at the cross-over points 10 to 14 can be realized by means of an adhesive on, for example, a synthetic resin basis. The wire 9 and also the optical fibres 5, 6 and 7 in grooves 2, 3 and 4 may consist of glass, it is, however, alternatively possible to accommodate a wire 9 of synthetic resin material in the groove 8 and to effect the connection in the cross-points 10 to 14 to the optical fibres 5, 6 and 7 in grooves 2 to 4 by heating the wire 9 at the cross-over points until the wire becomes sticky and sticks in the region of cross-over points to the optical fibres 5, 6 and 7 in grooves 2—4.

The construction shown in Figure 2 shows an alternative possibility of fixing the optical fibres 5 to 7. To this end groove 8 is filled, after the optical fibres have been accommodated, with synthetic resin material, for example in the form of a foam, such as polyurethane foam. This furnishes the additional advantage that when the cable develops a leak, migration of penetrating water into the longitudinal direction of the cable through the grooves 2 to 4 inclusive, is prevented.

Figure 3 shows a similar construction. Herein annular grooves 10 have been provided at regular distances in the cylindrical elongate body 1. Similar to the construction shown in the preceding Figure, the annular grooves have been filled with a synthetic resin material after the optical fibres 5 to 7, inclusive have been accommodated in the grooves 2 to 4, inclusive.

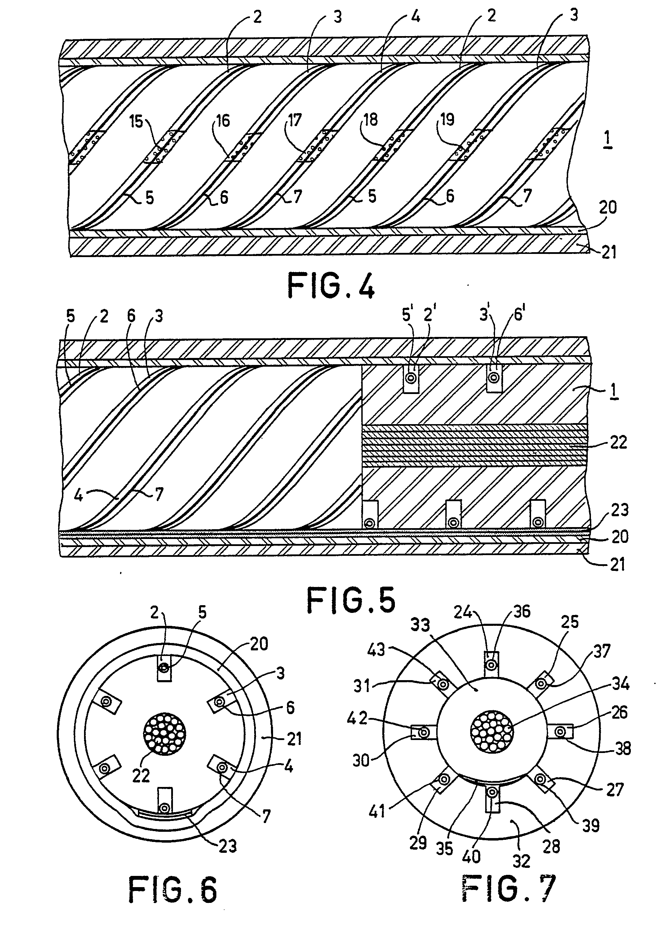

Figure 4 shows an alternative manner of fixing the optical fibres 5 to 7, inclusive, in the grooves 2 to 4, inclusive. A small quantity, which is, however, sufficient to fix the fibres, of a synthetic resin compound is injected into the respective groove parts (15 to 19 inclusive), for example a compound which foams after application.

In the Figures, the reference numerals have the same meaning. Thus, reference numeral 20 denotes a first synthetic resin material layer, for example in the form of a synthetic resin tape winding, whereas the assembly may be surrounded by an extruded synthetic resin jacket 21, for example consisting of polyethylene.

The cable, shown in Figure 5, comprises a cylindrical elongate body of a circular cross-section, the outer circumference of which has been provided with helical grooves. Reference numerals 2, 3 and 4 show a plan view of these grooves, which are also shown in cross-section at 2' and 3'. An element 22, which extends along the full length of the cable and which absorbs a tensile load, is in a central postion in the cylindrical body. This element may, for example, consist of twisted metal wires or of fibres consisting either of synthetic resin or glass. The cylindrical body 1 may, for example, consist of polyethylene. Optical fibres 5 to 7, inclusive have been accommodated in the grooves 2 to 4 inclusive. The fibres 5 to 7, inclusive, are disposed with a sufficient excess of length in the grooves 2 to 4, inclusive, so that changes in the length of the cable can be offset by movement of the optical fibres towards the axis of the cable or into a direction away therefrom, without a prohibited mechanical load being exercised on the optical fibres. An adhesive strip 23 has been disposed into the longitudinal direction of the cable, parallel to the axis thereof, with the adhesive side facing inwards, which causes the position of the optical fibres 5 to 7, inclusive, to be fixed. This fixation prevents the excess length of the optical fibres from migrating to certain places in the cable. The whole assembly may be provided with still further layers, two of which are shown in the Figure, for example a layer of wound tape 20 consisting of polyethylene terephthalate and a jacket 21, consisting of, for example, polyethylene. The cable according to the invention is manufactured in the customary manner, the cylindrical body 1 being obtained by means of extrusion. Subsequent to the point where the optical fibres 5 to 7, inclusive, are accommodated in the grooves 2 to 4, inclusive, and prior to the provision of the layer of wound tape 20 the adhesive strip 23 is disposed on the continuously moving cylindrical body 1.

Figure 6 shows a cross-sectional view of the finished cable having six grooves and a corresponding number of optical fibres; the reference numerals have the same meaning as in Fig. 5. The Figure shows the two layers of the adhesive strip 23; the layer which contacts the cylindrical body 1 is preferably permanently adhesive, so that a certain angular rotation of the optical fibre remains possible without a mechanical load which might cause fracture or without the optical quality of the fibres being negatively affected by so-called micro-bending.

Figures 5 and 6 show an embodiment in which the adhesive strip has been provided into the longitudinal direction, parallel with the axis of the cylindrical body 1. It is alternatively possible to provide the adhesive strip in the form of rings around the cylindrical body comprising the optical fibres or as a helix which crosses the grooves.

In the foregoing description where mention is made to a helically extending groove on the circumference of the cylindrical body 1, it is understood that this reference not only means a helix which has the same direction of rotation along the full length of the cylindrical body, but also a helix which periodically changes its direction, for example after each full turn.

In the foregoing description, embodiments have been particularly described in which the grooves have been provided in the outer circumference of a central cylindrical body. It will be obvious that fibres which are accommodated in grooves in the inner circumference of a jacket can be fixed in a similar manner.

Fig. 7 shows an example thereof. This Figure shows a cross-sectional view of a cable in which grooves 24 to 31 are pressed in a synthetic resin material jacket 32. The jacket 32 has been provided by extrusion around a cylindrical core 33, which extends along the full cable length. An armouring 34, for example of metal wires, has been provided inside the core 33. The core 33 has been provided with an adhesive strip 35, which extends into the longitudinal direction of the cable and an adhesive layer of which is facing outwards. Optical fibres 36—43 are accommodated in the helical grooves 24—31, which extend along the length of the cable. In the Figure, fibre 40 is connected to the adhesive strip 35 and fixed there by this strip. It will be obvious that in this manner all fibres are fixed after a full turn.

**Claims for the contracting states: AT, BE, FR, IT, NL**

1. Optical fibre cable in which the optical fibres are located in grooves which extend helically along the full length of the cable in a constant direction or in a periodically changing direction either in the outer surface of a cylindrical body which extends along the length of the cable, or in the inner surface of a jacket which directly surrounds said cylindrical body, the fibre in each groove having a length which exceeds the length of the groove, characterized in that the excess length of each fibre is uniformly distributed in the respective groove along the whole cable length, such distribution being maintained by fixing each fibre in the respective groove at regular intervals along the groove.

2. Optical fibre cable as claimed in Claim 1, characterized in that the fibres are fixed adhesively by a plastics material disposed in or over the grooves.

3. Optical fibre cable as claimed in Claims 1—2, characterized in that the fibres are fixed substantially after every full turn.

4. Optical fibre cable as claimed in Claims 1—2, characterized in that the fibres are periodically fixed by means of a wire accommodated in a groove which extends along the circumference of the cylindrical body, and which periodically crosses the grooves in which the optical fibres are accommodated, the optical fibres being connected to this wire at the crossing points.

5. Optical fibre cable as claimed in Claims 1—2, characterized in that the fibres are periodically fixed by means of a synthetic resin compound provided in a groove which extends along the circumference of the cylindrical body and which periodically crosses the grooves which accommodate the optical fibres.

6. Optical fibre cable as claimed in Claims 1—2, characterized in that the optical fibres are periodically fixed by a compound which is present in the grooves at regular intervals and which obstructs migration of the optical fibres.

7. Optical fibre cable as claimed in Claim 6, characterized in that the compound consists of a synthetic resin material either in a foamed or in an unfoamed form.

8. Optical fibre cable as claimed in Claims 1—2, characterized in that the optical fibres are fixed adhesively at intervals by an adhesive strip applied to the circumference of the cylindrical body.

9. Optical fibre cable as claimed in Claim 7, characterized in that the adhesive strip extends along the cylindrical body on the circumference of that body, the adhesive side facing the bottom of the groove.

**Claims for the contracting states: DE, GB, SE**

1. Optical fibre cable in which the optical fibres are located in grooves which extend helically along the full length of the cable in the same direction or in a periodically changing direction either in the outer surface of a cylindrical body which extends along the length of the cable, or in the inner surface of a jacket, which directly surrounds said cylindrical body, the fibre in each groove having a length which exceeds the length of the groove, and the excess length of each fibre being uniformly distributed in the respective groove along the whole cable length, such distribution being maintained by fixing each fibre in the respective groove at regular intervals along the groove, characterized in that the fibres are fixed adhesively by a plastics material disposed in or over the grooves.

2. Optical fibre cable as claimed in Claim 1, characterized in that the fibres are fixed substantially after every full turn.

3. Optical fibre cable as claimed in Claim 1, characterized in that the fibres are periodically fixed by means of a wire accommodated in a groove which extends along the circumference of the cylindrical body and which periodically crosses the grooves in which the optical fibres are accommodated, the optical fibres being connected to this wire at the crossing points.

4. Optical fibre cable as claimed in Claim 1, characterized in that the fibres are periodically fixed by means of a synthetic resin compound provided in a groove which extends along the circumference of the cylindrical body and which periodically crosses the grooves which accommodate the optical fibres.

5. Optical fibre cable as claimed in Claim 1, characterized in that the optical fibres are periodically fixed by a compound which is present in the grooves at regular intervals and which obstructs migration of the optical fibres.

6. Optical fibre cable as claimed in Claim 5, characterized in that the compound consists of a synthetic resin material either in a foamed or in an unfoamed form.

7. Optical fibre cable as claimed in Claim 1, characterized in that the optical fibres are fixed adhesively by an adhesive strip applied to the circumference of the cylindrical body.

8. Optical fibre cable as claimed in Claim 7, characterized in that the adhesive strip extends along the cylindrical body on the circumference of that body, with the adhesive side facing the bottom of the groove.

**Revendications pour les Etats Contractants: AT, BE, FR, IT, NL**

1. Câble comportant des fibres optiques du genre dans lequel les fibres optiques se situent dans des rainures s'étendant hélicoïdalement sur toute la longueur du câble dans la même direction ou dans un direction variant périodiquement, soit dans la surface extérieure d'un corps cylindrique qui s'étend le long de la longueur du câble, soit dans la surface intérieure d'une gaine entourant de façon directe ledit corps cylindrique, la fibre dans chaque rainure présentant une longueur, qui dépasse la longueur de la rainure caractérisé en ce que l'excès en longueur de chaque fibre est uniformément réparti dans la rainure respective sur toute la longueur de câble, une telle répartition étant maintenue par fixation de chaque fibre dans la rainure respective à des intervalles réguliers le long de la rainure.

2. Câble comportant des fibres optiques selon la revendication 1, caractérisé en ce que les fibres sont fixées de façon adhérente à l'aide d'un matériau plastique dans ou sur les rainures.

3. Câble comportant des fibres optiques selon les revendications 1 à 2, caractérisé en ce que les fibres sont fixées pratiquement après chaque révolution complète.

4. Câble comportant des fibres optiques selon les revendications 1 à 2, caractérisé en ce que les fibres sont fixées périodiquement à l'aide d'un fil appliqué dans une rainure qui s'étend sur la circonférence du corps cylindrique et qui croise périodiquement les rainures dans lesquelles sont appliquées les fibres optiques, les fibres optiques étant connectées à ce fil aux points de croisement.

5. Câble comportant des fibres optiques selon les revendications 1 à 2, caractérisé en ce que les fibres sont fixées périodiquement à l'aide d'une masse de matière synthétique appliquée dans une rainure qui s'étend sur la circonférence du corps cylindrique et qui croise périodiquement les rainures destinées aux fibres optiques.

6. Câble comportant des fibres optiques selon les revendications 1 à 2, caractérisé en ce que les fibres optiques sont fixées périodiquement à l'aide d'une masse qui est présente dans les rainures à des intervalles réguliers et qui empêche le déplacement des fibres optiques.

7. Câble comportant des fibres optiques selon la revendication 6, caractérisé en ce que la masse est constituée par un matière synthétique, soit à l'état de mousse, soit sous une forme non mousseuse.

8. Câble comportant des fibres optiques selon les revendications 1 à 2, caractérisé en ce que les fibres optiques sont fixées de façon adhérente à des intervalles dans une bande adhésive appliquée à la circonférence du corps cylindrique.

9. Câble comportant des fibres optiques selon la revendication 7, caractérisé en ce que la bande adhésive s'étend sur le corps cylindrique sur la circonférence dudit corps, la face adhésive étant opposée au fond de la rainure.

**Revendications pour les Etats Contractants: DE, GB, SE**

1. Câble comportant des fibres optiques du genre dans lequel les fibres optiques se situant dans des rainures s'étendant hélicoïdalement sur toute la longueur du câble dans la même direction ou dans une direction variant périodiquement, soit dans la surface extérieure d'une corps cylindrique qui s'étend le long de la longueur du câble, soit dans la surface intérieur d'une gaine entourant de façon directe ledit corps cylindrique, la fibre dans chaque rainure présentant une longueur qui dépasse la longueur de la rainure et l'excès en longueur de chaque fibre étant uniformément réparti dans la rainure respective sur toute la longueur du câble, une tell répartition étant maintenue par fixation de chaque fibre dans la rainure respective à des intervalles réguliers le long de la rainure, caractérisé en ce que les fibres sont fixées de façon adhérente par un marériau plastique appliqué dans ou sur les rainures.

2. Câble comportant des fibres optiques selon la revendication 1, caractérisé en ce que les fibres sont fixées pratiquement après chaque révolution complète.

3. Câble comportant des fibres optiques selon la revendication 1, caractérisé en ce que les fibres sont fixées périodiquement à l'aide d'une fil appliqué dans une rainure, qui s'étend sur la circonférence du corps cylindrique et qui croise périodiquement les rainures dasn lesquelles sont appliquées les fibres optiques, les fibres optiques étant connectées à ce fil aux points de croisement.

4. Câble comportant des fibres optiques selon la revendication 1, caractérisé en ce que les fibres sont fixées périodiquement à l'aide d'une masse de matière synthétique appliquée dans une rainure, qui s'étend sur la circonférence du corps cylindrique et qui croise périodiquement les rainures destinées aux fibres optiques.

5. Câble comportant des fibres optiques selon la revendication 1, caractérisé en ce que les fibres optiques sont fixées périodiquement à l'aide d'une masse, qui est présente dans les rainures à des intervalled réguliers et qui empêche le déplacement des fibres optiques.

6. Câble comportant des fibres optiques selon la revendication 5, caractérisé en ce que la masse est constituée par une matière synthétique, soit à l'état de mousse, soit sous une forme non mousseuse.

7. Câble comportant des fibres optiques selon la revendication 1, caractérisé en ce que les fibres optiques sont fixées de façon adhérente à des intervalles dans une bande adhésive appliquée à la circonférence du corps cylindrique.

8. Câble comportant des fibres optiques selon la revendication 7, caractérisé en ce que la bande adhésive s'étend sur le corps cylindrique sur la circonférence dudit corps, la face adhésive étant opposée au fond de la rainure.

**Patentansprüche für die vertragsstaaten: AT, BE, FR, IT, NL**

1. Mit optischen Fasen versehenes Kabel, bei dem sich die optischen Fasern in Nuten befinden, die gemäss einer Schraubenlinie über die ganze Länge in derselben Richtung oder in einer sich periodisch ändernden Richtung verlaufen, entweder in der Aussenoberfläche eines Zylindrischen Körpers, der sich in der Längsrichtung des Kabels erstreckt, oder in der Inneroberfläche eines Mantels, der den genannten zylindrischen Körper unmittelbar umgibt, wobei die Faser in jeder Nut eine Länge hat, die grösser ist also die Länge der Nut, dadurch gekennzeichnet, dass die übermässige Länge jeder Faser in der betreffenden Nut über die ganze Kabellänge gleichmässig verteilt wird, wobei diese Verteilung dadurch beibehalten wird, dass jede Faser in der betreffenden Nut in regelmässigen Abständen längs der Nut fixiert wird.

2. Mit optischen Fasern versehenes Kabel nach Anspruch 1, dadurch gekennzeichnet, dass die Fasern durch einen Kunststoff, der in oder über die Nuten angebracht ist, haftend fixiert sind.

3. Mit optischen Fasern versehenes Kabel nach Anspruch 1—2, dadurch gekennzeichnet, dass die Fasern im wesentlichen nach jeder vollständigen Windung fixiert sind.

4. Mit optischen Fasern versehenes Kabel nach Anspruch 1—2, dadurch gekennzeichnet, dass die Fasern periodisch mit Hilfe eines Drahtes fixiert sind, der sich in einer

Nut befindet, die sich auf dem Umfang des zylondrischen Körpers erstreckt und die die Nuten, in denen die optischen Fasern liegen, periodisch kreuzt, wobei die optischen Fasern an den Kreuzeungspunkten mit diesem Draht verbunden sind.

5. Mit optischen Fasern versehenes Kabel nach Anspruch 1—2 dadurch gekennzeichnet, dass die Fasern periodisch mittels einer Kunstharzmasse fixiert sind, die sich in einer Nut befindet, die sich auf dem Umfang des zylindrischen Körpers erstreckt und die die Nuten, in denen die optischen Fasern liegen, periodisch kreuzt.

6. Mit optischen Fasern versehenes Kabel nach Anspruch 1—2, dadurch gekennzeichnet, dass die optischen Fasern periodisch fixiert sind durch eine in den Nuten in regelmässigen Abständen vorhandene, die Verschiebung der optischen Fasern verhindernde Masse.

7. Mit optischen Fasern versehenes Kabel nach Anspruch 6, dadurch gekennzeichnet, dass die Masse aus Kunstharz, in aufgeschäumter oder in ungeschäumter Form, besteht.

8. Mit optischen Fasern versehenes Kabel nach Anspruch 1—2, dadurch gekennzeichnet, dass die optischen Fasern dadurch haftend fixiert sind, dass sie periodisch mit einem sich auf dem Umfang des zylindrischen Körpers befindenden Klebestreifen verbunden sind.

9. Mit optischen Fasern versehenes Kabel nach Anspruch 7, dadurch gekennzeichnet, dass der Klebestreifen sich längs des zylindrischen Körpers auf dem Umfang dieses Körpers erstreckt, wobei die klebrige Seite dem Boden der Nut zugekehrt ist.

## Patentansprüche für die vertragsstaaten: DE, GB, SE

1. Mit optischen Fasern versehenes Kabel, bei dem sich die optischen Fasern in Nuten befinden, die gemäss einer Schraubenlinie über die ganze länge in derselben Richtung oder in einer sich periodisch ändernden Richtung verlaufen, entweder in der Aussenoberfläche eines zylindrischen Körpers, der sich in der Längsrichtung des Kabels erstreckt, oder in der Innenoberfläche eines Mantels, der den genannten Zylindrischen Körper unmittelbar umgibt, wobei die Faser in jeder Nut eine Länge hat, die grösser ist als die Länge der Nut und wobei die übermässige Länge jeder Faser in der betreffenden Nut über die ganze Kabellänge gleichmässig verteilt wird, wobei diese Verteilung dadurch beibehalten wird, dass jede Faser in der betreffenden Nut in regelmässigen Abständen längs der Nut fixiert wird, dadurch gekennzeichnet, dass die Fasern durch einen Kunststoff, der in oder über die Nuten angebracht ist, haftend fixiert sind.

2. Mit optischen Fasern versehenes Kabel nach Anspruch 1, dadurch gekennzeichnet, dass die Fasern im wesentlichen nach jeder vollständigen Windung fixiert sind.

3. Mit optischen Fasern versehenes Kabel nach Anspruch 1, dadurch gekennzeichnet, dass die Fasern periodisch mit Hilfe eines Drahtes fixiert sind, der sich in einer

Nut befindet, die sich auf dem Umfang des zylindrischen körpers erstreckt und die die Nuten, in denen die optischen Fasern liegen, periodisch kreuzt, wobei die optischen Fasern an den Kreuzungspunkten mit diesem Draht verbunden sind.

4. Mit optischen Fasern versehenes Kabel nach Anspruch 1, dadurch gekennzeichnet, dass die Fasern periodisch mittels einer Kunstharzmasse fixiert sind, die sich in einer Nut befindet, die sich auf dem Umfang des zylindrischen Körpers erstreckt und die die Nuten, in denen die optischen Fasern liegen, periodisch kreuzt.

5. Mit optischen Fasern versehenes Kabel nach Anspruch 1, dadurch gekennzeichnet, dass die optischen Fasern periodisch fixiert sind durch eine in den Nutern in regelmässigen Abständen vorhandene, die Verschiebung der optischen Fasern verhindernde Masse.

6. Mit optischen versehenes Kabel nach Anspruch 5, dadurch gekennzeichnet, dass die Masse aus Kunstharz, in aufgeschäumter oder in ungeschäumter Form, gesteht.

7. Mit optischen Fasern versehenes Kabel nach Anspruch 1, dadurch gekennzeichnet, dass die optischen Fasern dadurch haftend fixiert sind, dass sie periodisch mit einem sich auf dem Umfang des zylindrischen Körpers befindenden Klebestreifen verbunden sind.

8. Mit optischen Fasern versehenes Kabel nach Anspruch 7, dadurch gekennzeichnet, dass der Klebestreifen sich längs des zylindrischen Körpers auf dem Umfang dieses Körpers erstreckt, wobei die klebrige Seite dem Boden der Nut zugekehrt ist.

FIG.1

FIG.2

FIG.3

FIG. 4

FIG. 5

FIG. 6

FIG. 7